(19) Europäisches Patentamt

European Patent Office

Office européen des brevets

(11) **EP 3 291 048 A1**

(12) **EUROPEAN PATENT APPLICATION**

(43) Date of publication:
**07.03.2018 Bulletin 2018/10**

(51) Int Cl.:
***G06F 1/20*** *(2006.01)*

(21) Application number: **16187236.1**

(22) Date of filing: **05.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Intel IP Corporation Santa Clara, CA 95054 (US)**

(72) Inventors:
• **KOCAGOEZ, Kenan 90491 Nuernberg (DE)**
• **RAAF, Bernhard 82061 Neuried (DE)**

(74) Representative: **Patentanwälte Lambsdorff & Lange Dingolfinger Strasse 6 81673 München (DE)**

(54) **METHOD AND DEVICE FOR THERMAL MANAGEMENT CONTROL OF AN ELECTRONIC DEVICE**

(57) This disclosure relates to a method for thermal management control of an electronic device, the method comprising: changing a state of the electronic device from a first state as initial state to a second state, or from the second state as initial state to the first state, based on a temperature of the electronic device compared to a given temperature threshold, wherein the first state is a state of activity and the second state is a state of throttled activity; and changing the state of the electronic device back to the initial state based on a prediction of a main thermal transient response of the electronic device.

500

Changing a state of the electronic device from a first state to a second state based on a temperature of the electronic device exceeding a given temperature threshold, wherein the first state is a state of activity and the second state is a state of throttled activity

501

Changing the state of the electronic device back to the first state based on a prediction of a main thermal transient response of the elctronic device

502

**Fig. 5**

EP 3 291 048 A1

## Description

### FIELD

The disclosure relates to a method and device for thermal management control of an electronic device such as a mobile terminal. In particular, the disclosure relates to techniques for utilizing temperature prediction with thermal capacitances to optimize mobile traffic shaping.

### BACKGROUND

Next generation wireless communication standards such as Rel-14 LTE (Long Term Evolution) and 5G will further increase aggregated radio channel bandwidth, enhance MIMO (multiple input multiple output) and interference cancellation capabilities to allow peak data rates to go above 1Gbps. High data processing load along with more complex transceiver requirements will further increase demand for dynamic power consumption. Also anticipating further CMOS scaling (e.g. 10nm, 7nm, 5nm) that lead to exponentially higher leakage current via lower subthreshold voltage and reduced channel lengths one gets obvious that these high speed data traffics cannot be fulfilled sustainably in a small form factor device. Widely discussed traffic shaping (data throttling) methods that limit device uplink as well as downlink capabilities will be more and more present and visible since applied/embed in standard user scenarios to manage device thermal conditions. Hence, there is a need to improve traffic shaping in the mobile device.

### BRIEF DESCRIPTION OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description.

Fig. 1 is a schematic diagram illustrating thermal transient behavior 100 during a burst and throttling cycle.

Fig. 2 is a block diagram illustrating a thermal RC ladder network 200.

Fig. 3 is a schematic diagram 300 illustrating two different exemplary thermal profiles 301, 302 versus time.

Fig. 4 is a state diagram 400 schematically illustrating different states UE IDLE 403, UE CONNECTED 401 and UE THROTTLED 402 of an electronic device such as a user equipment according to the disclosure.

Fig. 5 illustrates a schematic diagram of a method 500 for thermal management control of an electronic device according to the disclosure.

Fig. 6 illustrates a block diagram of a thermal management control device 610 for thermal management control of an electronic device 600 such as a user equipment (UE) according to the disclosure.

Figures 7a and 7b are diagrams illustrating temperature (Fig. 7a) and power (Fig. 7b) versus time for UE throttling based on temperature/power input.

Figures 8a and 8b are diagrams illustrating temperature (Fig. 8a) and power (Fig. 8b) versus time for UE throttling based on temperature/power input according to the disclosure.

Figure 9a is a temperature diagram 900a illustrating a temperature response for a 1-step RC ladder network according to the disclosure.

Figure 9b is a temperature diagram 900b illustrating a temperature response for a 3-step RC ladder network according to the disclosure.

Figure 9c is a temperature diagram 900c illustrating a temperature response for a 6-step RC ladder network according to the disclosure.

Figure 10a is a block diagram 1000a illustrating a Foster RC ladder network used for temperature prediction according to the disclosure.

Figure 10b is a block diagram 1000b illustrating a Cauer RC ladder network used for temperature prediction according to the disclosure.

Figure 11 is a schematic diagram 1100 illustrating UE thermal management by utilizing RC ladder networks according to the disclosure.

Figure 12a is an exemplary capacitor profile of a Foster RC ladder network used for temperature prediction according to the disclosure.

Figure 12b is an exemplary capacitor profile of a Cauer RC ladder network used for temperature prediction according to the disclosure.

## DETAILED DESCRIPTION

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the present invention. The following detailed description, therefore, is not to be taken in a limiting sense, and the scope of the present invention is defined by the appended claims.

The following terms, abbreviations and notations will be used herein:

| | |
|---|---|
| RF: | Radio Frequency |
| LTE: | Long Term Evolution |
| UE: | User Equipment, mobile device, mobile terminal |
| OFDM: | Orthogonal Frequency Division Multiplex |
| eNB, eNodeB: | Base station |
| CQI: | Channel Quality Indicator |
| AFC: | Automatic Frequency Control |
| CFD: | Computational Fluid Dynamics |
| SoC: | System on Chip |
| RC: | Resistor Capacitor |
| DRX: | Discontinuous Reception |
| MIMO: | Multiple Input Multiple Output |

The methods and devices described herein may be used for thermal management in electronic devices, in particular in a user equipment (UE), mobile device or mobile terminal. It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The methods and devices described herein may be implemented in wireless communication networks, in particular communication networks based on mobile communication standards such as LTE, in particular LTE-A and/or OFDM and successor standards such as 5G. The methods are also applicable for connectivity standards, in particular high speed standards from the 802.11 family e.g. 802.11ad and successor standards. The methods and devices described below may be implemented in electronic devices such as mobile devices (or mobile stations or User Equipments (UE)), in particular in radio receivers of such mobile devices, but also base stations (eNodeB, eNB, access point), in particular small ones where active cooling is not feasible from cost, space, or power constraints. The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The methods and devices described herein may be configured to transmit and/or receive radio signals and performing associated signal processing. Radio signals may be or may include radio frequency signals radiated by a radio transmitting device (or radio transmitter or sender) with a radio frequency lying in a range of about 3 kHz to 300 GHz. The frequency range may correspond to frequencies of alternating current electrical signals used to produce and detect radio waves.

3

The methods and devices described herein after may be designed in accordance to mobile communication standards such as e.g. the Long Term Evolution (LTE) standard or the advanced version LTE-A thereof. LTE (Long Term Evolution), marketed as 4G LTE and future 5G LTE, is a standard for wireless communication of high-speed data for mobile phones and data terminals.

The methods and devices described hereinafter may be applied in OFDM systems. OFDM is a scheme for encoding digital data on multiple carrier frequencies. A large number of closely spaced orthogonal sub-carrier signals may be used to carry data. Due to the orthogonality of the sub-carriers crosstalk between sub-carriers may be suppressed.

The methods and devices described hereinafter may be applied in MIMO systems and diversity receivers. Multiple-input multiple-output (MIMO) wireless communication systems employ multiple antennas at the transmitter and/or at the receiver to increase system capacity and to achieve better quality of service. In spatial multiplexing mode, MIMO systems may reach higher peak data rates without increasing the bandwidth of the system by transmitting multiple data streams in parallel in the same frequency band. A diversity receiver uses two or more antennas to improve the quality and reliability of a wireless link.

In the following, embodiments are described with reference to the drawings, wherein like reference numerals are generally utilized to refer to like elements throughout. In the following description, for purposes of explanation, numerous specific details are set forth in order to provide a thorough understanding of one or more aspects of embodiments. However, it may be evident to a person skilled in the art that one or more aspects of the embodiments may be practiced with a lesser degree of these specific details. The following description is therefore not to be taken in a limiting sense.

The various aspects summarized may be embodied in various forms. The following description shows by way of illustration various combinations and configurations in which the aspects may be practiced. It is understood that the described aspects and/or embodiments are merely examples, and that other aspects and/or embodiments may be utilized and structural and functional modifications may be made without departing from the scope of the present disclosure.

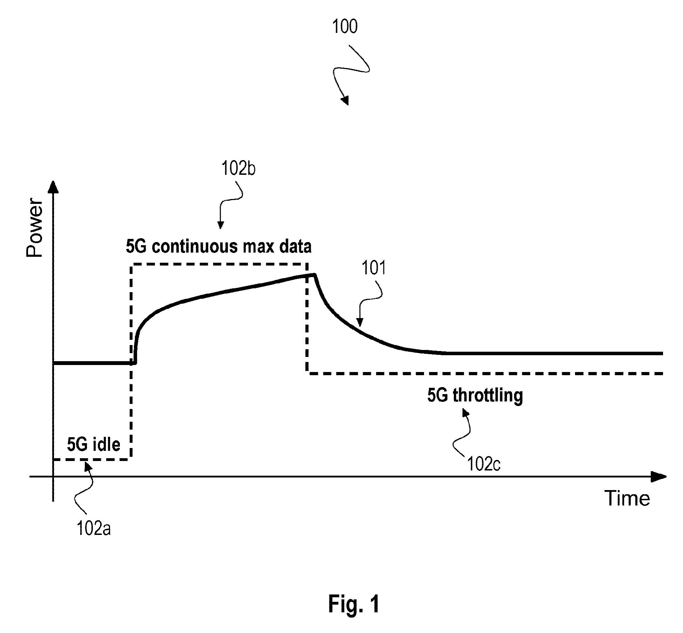

Fig. 1 is a schematic diagram illustrating thermal transient behavior 100 during a burst and throttling cycle.

When looking at thermal transients during typical modem use cases as shown in Figure 1 for transitions between 5G idle state 102a, 5G continuous maximum data state 102b and 5G throttling state 102c, the non-linear behaviour of temperature response 101 versus applied data throttling scheme can be observed.

Especially during the initial period of throttling begin 102c, temperature response 101 is almost linear in time with a steep gradient contributing with high degree on heat mitigation dominated by fastest time constants and smallest capacitances, which turns with time to a more and more asymptote like approximation towards a steady-state temperature dominated by slowest time constants and largest capacitances.

The methods and devices for thermal management control as described hereinafter are based on the concept to anticipate and utilize temperature transient behaviour during application of any modem throttling scheme.

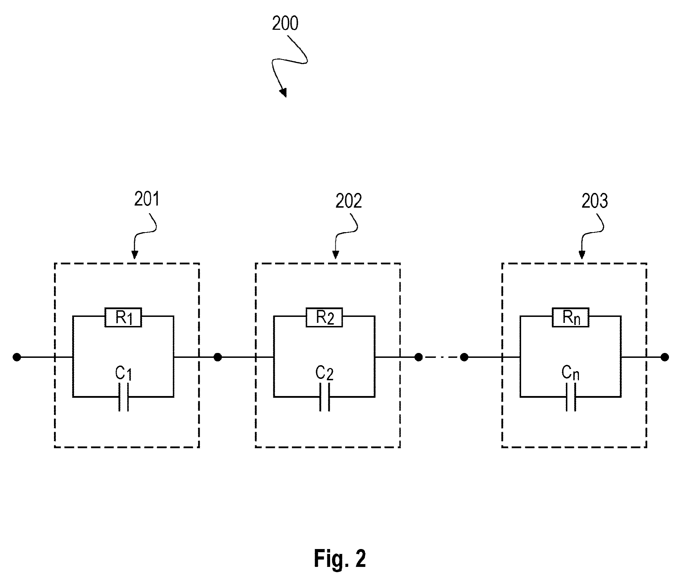

Fig. 2 is a block diagram illustrating a thermal RC ladder network 200 that may be used for predicting the thermal transient response according to the disclosure.

Thermal networks, so called RC ladders, consisting of resistances (Rx) and capacitances (Cx) can be created to model the respective transient performance. The RC ladder is a model for the temperature evolution, modelled by the voltage in the RC ladder, depending on thermal capacitance (modelled by the Cs) and thermal resistance (modelled by the Rs). A MOSFET device which is driven with a certain power, will reach steady-state temperature only after a given time duration. This is due to the fact, that at steady-state temperature, which can be called the thermal equilibrium, thermal impedance (Zth) becomes the thermal resistance (Rth) because in equilibrium the capacitors neither act as sink nor source.

Thermal impedance again shows that materials possess thermal inertia, which means that temperature cannot change immediately. This is true for temperature changes in positive and negative direction, meaning increasing or throttling chip total power consumption. Most prominent RC ladder representations are according to Foster ("A Simplified Method of Generating Thermal Models for Power MOSFETs", Kandarp P., Wharton M., Vishay S., IEEE proceedings 2002") and/or Cauer ("Thermal RC Ladder Networks", Roger Paul, ON Semiconductor, AND8221/D, 2006").

The RC ladder can include a single thermal impedance consisting of a capacitor C and a resistor R. Alternatively the RC ladder can include multiple of such thermal impedance elements. RC ladders including multiple thermal impedance elements show superior performance due to the following reasons:

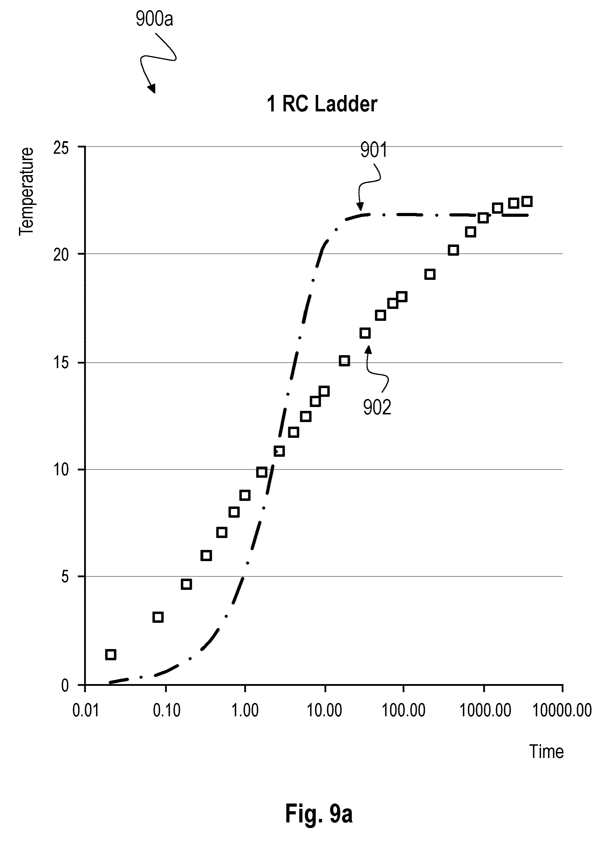

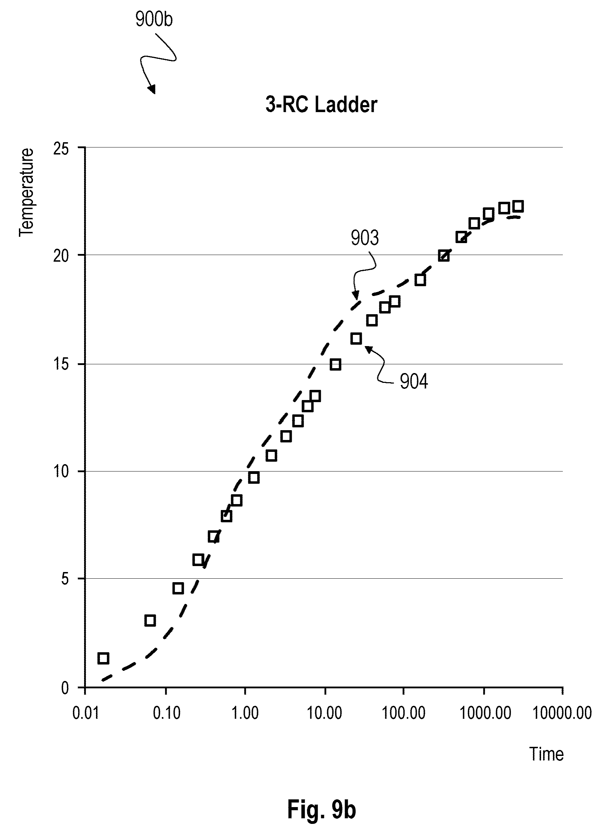

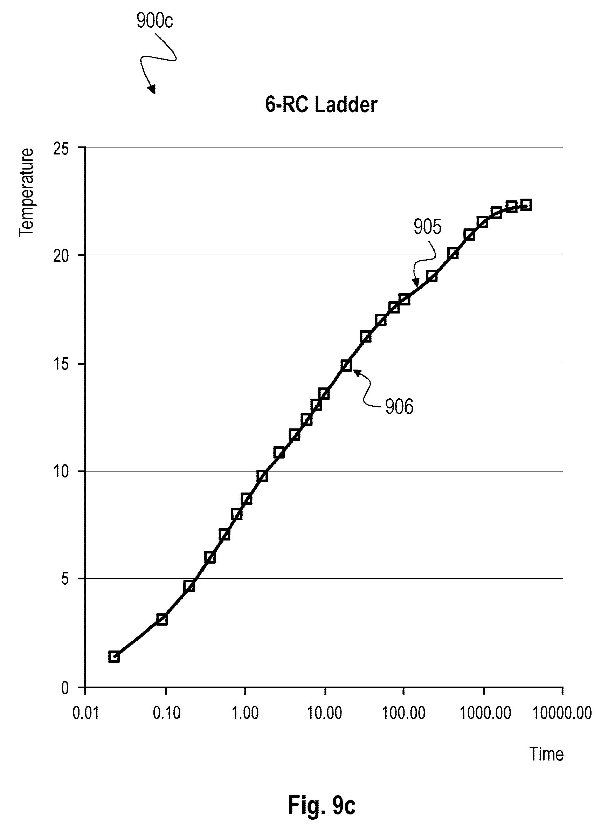

Chip heat flow goes through multiple layers, from silicon, package substrate, remaining parts of package, then board, housing etc. Every layer can be represented via a thermal Resistance (R) and has a specific thermal Capacitance (C). Relative temperature increase from Junction to Ambient (JA) requires consideration of all (major) individual RC elements between JA. Add up of individual Resistances, to a single R-JA makes possible to calculate steady state temperature as deltaT = P * R_JA. Add up of individual RCs, to a single RC, fails (physically and mathematically) to properly reflect temperature transient, because different time scales are involved. The layers of physical structures naturally form a Cauer-Ladder, which can also be transferred into an equivalent Foster Ladder (the latter is used for fitting curves in Figures 9a, 9b, 9c). From the RC ladder a more accurate temperature-time model can be built compared to the simple RC exponential:

$$T\ (t) = T_a + \quad P\ \left( \underbrace{R_{n1}\left(1 - e^{\left(-\frac{t}{\tau_{n1}}\right)}\right)}_{\text{first rung}} + \underbrace{R_{n2}\left(1 - e^{\left(-\frac{t}{\tau_{n2}}\right)}\right)}_{\text{second rung}} + \cdots + \underbrace{R_{n6}\left(1 - e^{\left(-\frac{t}{\tau_{n6}}\right)}\right)}_{\text{sixth rung}} \right)$$

or in a more general representation:

$$T(t) = T_a + P\left( R_{n1}\left(1 - A_1 e^{\left(-\frac{t}{\tau_{n1}}\right)}\right) + R_{n2}\left(1 - A_2 e^{\left(-\frac{t}{\tau_{n2}}\right)}\right) + \ldots + R_{n6}\left(1 - A_6 e^{\left(-\frac{t}{\tau_{n6}}\right)}\right) \right)$$

where Ai are constants to fit the curve to the starting value and derivatives (or temperatures in the capacitors down the ladder). Also below the response then depends on the Ai as well, apart from Rn and $\tau_n$.

The multiple elements of the ladder give rise to different contributions of the temperature response, with different time-constants ($\tau_{n1}$ through $\tau_{n6}$) and amplitudes in temperature (corresponding to $P\,R_{n1}$ through $P\,R_{n6}$).

By using such a thermal RC ladder network 200 (either with one single or with multiple thermal impedance elements) for predicting the thermal transient response, thermal management control can be improved, by filtering small capacitances (C) and fast time constants (RC) from the transient response, to calculate constraint dependent application time of any modem throttling scheme. In such way, new abort criteria can be included or added which trigger or indicate throttling end when e.g. a target cooling fraction of the achievable transient profile is reached (e.g. 55%). Secondly, when in throttling mode, the thermal prediction can be used to predict the time the system will be able to run in a higher power (Burst-) mode and switch into this mode once the time is long enough to justify switching overhead. This can be used as another criterion to end UE throttling as soon a predetermined burst length can be thermally achieved at given UE capabilities. Thirdly, the thermal transient information can be utilized to select a specific modem throttling profile, e.g. method, severity, possibly duty cycle and frequency of switching, such that a target temperature mitigation can be achieved in a given maximum throttling time. Fourthly, thermal transient utilization can be coupled and based to modem throttling control via RC ladder representations of the Foster and/or Cauer model which yield sufficient accuracy at reduced complexity. Fifthly, the "memory" or "thermal memory" in the RC ladder can be taken into account, i.e., the small capacitances (later Cs of Cauer model) which do not immediately have an impact on the temperature slope, but on the later evolution and thus determine when it makes sense to stop throttling or add another throttling level as small capacitances still contribute to temperature increase of previous burst cycle. This results in switch back earlier as there is not so much heat in the Cs further down the RC ladder, thereby avoiding to utilize a worst case scenario, leading to a rather low threshold temperature.

There is a further example where it is predicted whether an extension of the throttling time by a given duration will give enough extra tome for the subsequent boost period (e.g. 5 seconds more throttling may buy 3 extra seconds of boost ,this is a good ration so it is justified to wait the extra 5 seconds. However if say 10 second extra wait only buy 4 extra second boost then this does not justify to wait 10 instead of 5 seconds as the incremental wait of 5 seconds only buys just 1 second boost time, which most likely reduces the average throughput. So the invention also allows predicting the optimum time to end throttling. Similarly, when the temperature rises and approaches the maximum, also the leakage current/power increases. The invention allows predicting how much longer the subsequent throttling time needs to take if the throttling is delayed by a given time, and whether it is beneficial from a total performance point of view to wait a little longer. It may be necessary to predict also the temperature evolution during the rest of the throttling cycle, rather than simply waiting and then decide whether to stop throttling a little later, because of the there is a delay between deciding to stop throttling until this decision becomes effective. This may be due to control loops including ones in the other communication station (eNB or access point), e.g. throttling may be caused by reporting poor channel conditions to the eNB and it takes some time until the normal reports reach the eNB and are considered there. So selecting the optimum onset and stop of throttling requires predicting the temperature evolution during both the throttled and non-throttled part.

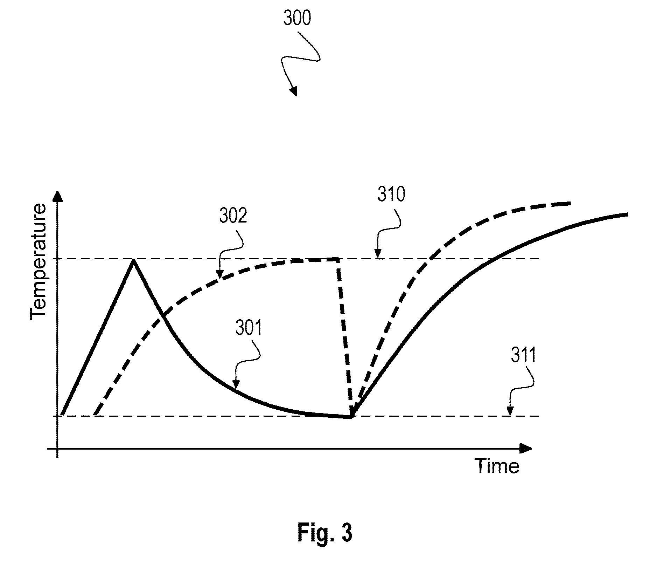

Fig. 3 is a schematic diagram 400 illustrating two different exemplary thermal profiles 401, 402 versus time. From Fig. 3 it can be seen that it is not sufficient to only consider the lower throttle temperature 311. Two temperature profiles 301, 302 are depicted in Fig. 3; both are reaching the same temperature at the same time and both are then switching to non-throttling mode. In the first temperature profile 301, throttling was started after temperature quickly reached the maximum 310 (e.g. due to operating at full power), then there was a gradual cooling as the system was throttled but at comparatively high power (e.g. packets may have been scheduled to the UE during throttling mode). Eventually the temperature reaches the lower threshold 311 very slowly.

Consequently, there was little time for the thermal capacitances down the ladder to heat up and afterwards there was time for them to cool down. Therefore, if throttling is switched off these capacitances will dampen the temperature increase and it will take longer to reach the throttling temperature 310 again.

In the second temperature profile 302, everything is vice versa: The upper threshold temperature 310 was reached slowly and the system was operating there for a long time, so also the Cs further down the ladder could heat up. The reason for this may have been that there may not have been full traffic during non-throttling time, but just enough throughput and power to keep the temperature almost steady close to but just below the upper limit. Then the power was reduced abruptly, causing fast cooling of the initial Cs but not yet the further ones, which at this point store more heat than in the previous case. Therefore, when operating at high power again, the system will hit the upper throttling temperature 310 faster. In order to ensure a useful time in non-throttled mode, it is therefore essential to consider thermal capacitances in the system and consider the history of the thermal evolution, not only the current temperature.

Another criterion upon which the prediction may be based is described in the following. High throughput inherently causes high power consumption and the associated thermal energy subsequently needs to be dissipated. Heat dissipation is most effective at high temperature as the dissipated power in equilibrium is proportional to the temperature difference divided by (total) thermal resistance. This may indicate that it is most advantageous to run the system as close to maximum power as possible. However due to thermal leakage power, the hotter the system gets the higher the contribution of leakage power which reduces the effective cooling. Effective cooling is here called the dissipated power minus leakage power. While the former increases with temperature, the latter decreases due to the negative contribution and because the absolute value of the leakage power increases with temperature. This reduces cooling efficiency towards higher temperatures. Consequently the optimum temperature from a cooling perspective is at medium temperatures. Predicting the temperature evolution allows predicting how the system can be maintained in this optimum temperature range for an extended time in the future and consequently deciding on thermal management accordingly.

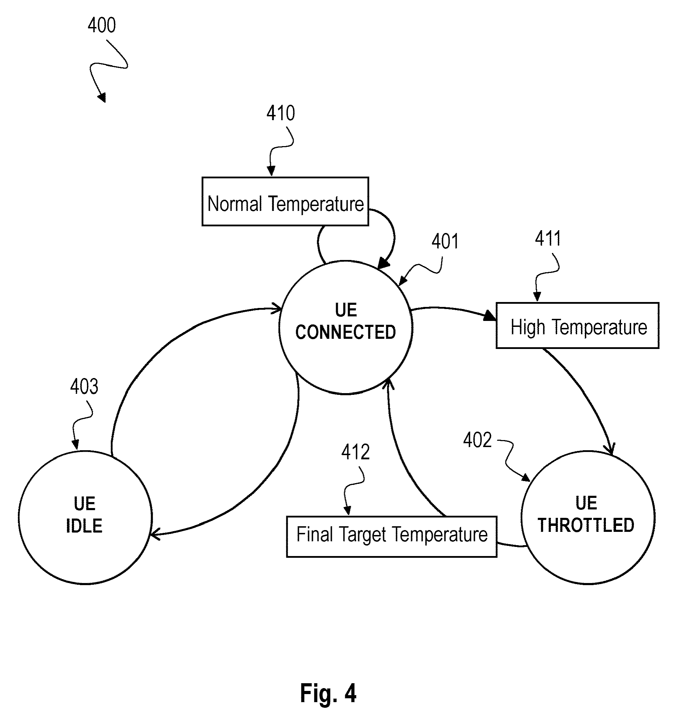

Fig. 4 is a state diagram 400 schematically illustrating different states UE IDLE 403, UE CONNECTED 401 and UE THROTTLED 402 of an electronic device such as a user equipment according to the disclosure. During normal temperature 410, e.g. due to low activity of the UE, the user equipment changes between the states UE IDLE 403, i.e. idle mode and UE CONNECTED 401, i.e. connected mode. Idle mode 403 means the case where the UE tries to find and maintain service, i.e. PLMN selection, cell selection and reselection, location registration, reception of system information, and enables the UE to establish an RRC connection for signaling or data transfer as well as be able to receive possible incoming connections via paging. Connected mode 401 means the case where UE is continuously monitoring PDCCH (Physical Downlink Control Channel) for data and control signals.

When temperature becomes high and a high temperature threshold 411 is reached, e.g., due to high activity of the UE, the user equipment transitions from state UE CONNECTED 401 to state UE THROTTLED 402. If temperature falls again, e.g. due to low activity of the UE, e.g. due to throttling or due to less data being scheduled or due to both, and a final target temperature 412 is reached the user equipment transitions back from state UE THROTTLED 402 to UE CONNECTED 401.

Thermal management control between the above described states UE THROTTLED 402 and UE CONNECTED 401 can be realized by a method 500 as described in the following.

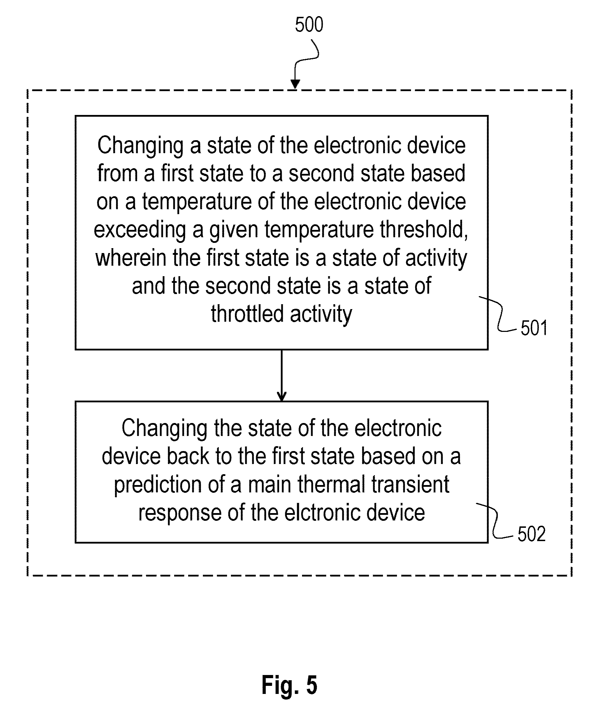

Fig. 5 illustrates a schematic diagram of a method 500 for thermal management control of an electronic device, e.g. a UE as described above with respect to Fig. 4, according to the disclosure.

The method 500 includes: changing 501 a state of the electronic device from a first state as initial state to a second state (as shown in Fig. 5), or alternatively (not shown in Fig. 5) from the second state as initial state to the first state, based on a temperature of the electronic device exceeding a given temperature threshold, wherein the first state is a state of activity and the second state is a state of throttled activity. The first state may be for example the UE CONNECTED state 401 described above with respect to Fig. 4 and the second state may be for example the UE THROTTLED state 402 described above with respect to Fig. 4. The method 500 further includes: changing 502 the state of the electronic device back to the initial state based on a prediction of a main thermal transient response of the electronic device.

The main thermal transient response may include a section of a thermal transient response of the electronic device in which a main temperature development occurs or in which a main thermal energy flow occurs. The main thermal transient response may include an initial section of the thermal transient response. However the main thermal transient response may include more than the effect of a single RC term of a thermal ladder representation of the thermal response.

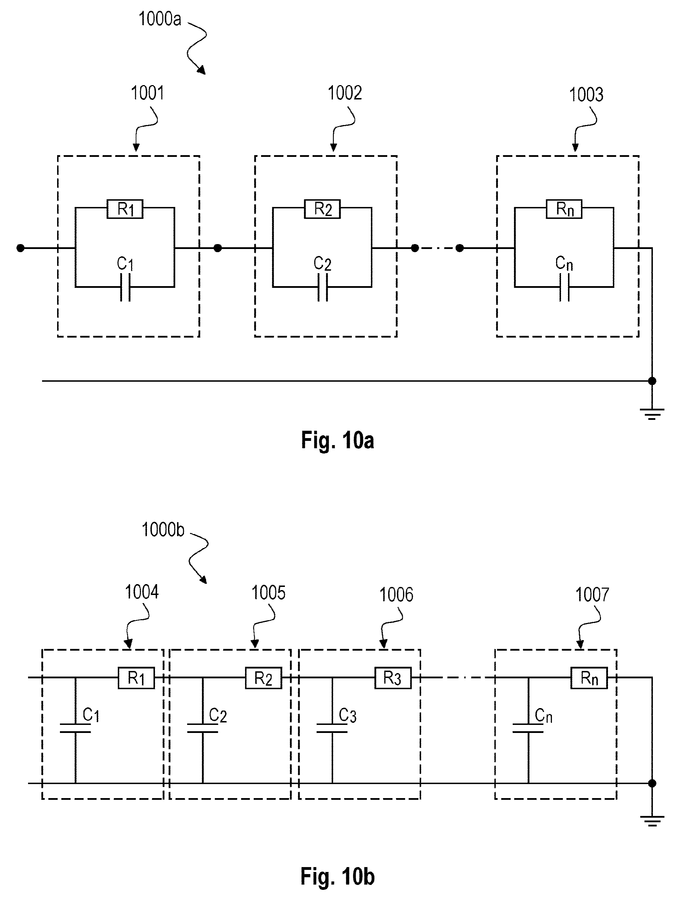

The method 500 may further include predicting the main thermal transient response of the electronic device based on a thermal network comprising a plurality of thermal impedance elements, e.g. a thermal network as described above with respect to Fig. 2 or below with respect to Figures 10a and 10b.

The thermal network may include an RC ladder which thermal impedance elements are formed by resistors (R) and capacitances (C), e.g. an RC ladder as described above with respect to Fig. 2 or below with respect to Figures 10a and 10b. The RC ladder may be according to a Foster or Cauer model, e.g. as described above with respect to Fig. 2 or below with respect to Figures 10a and 10b.

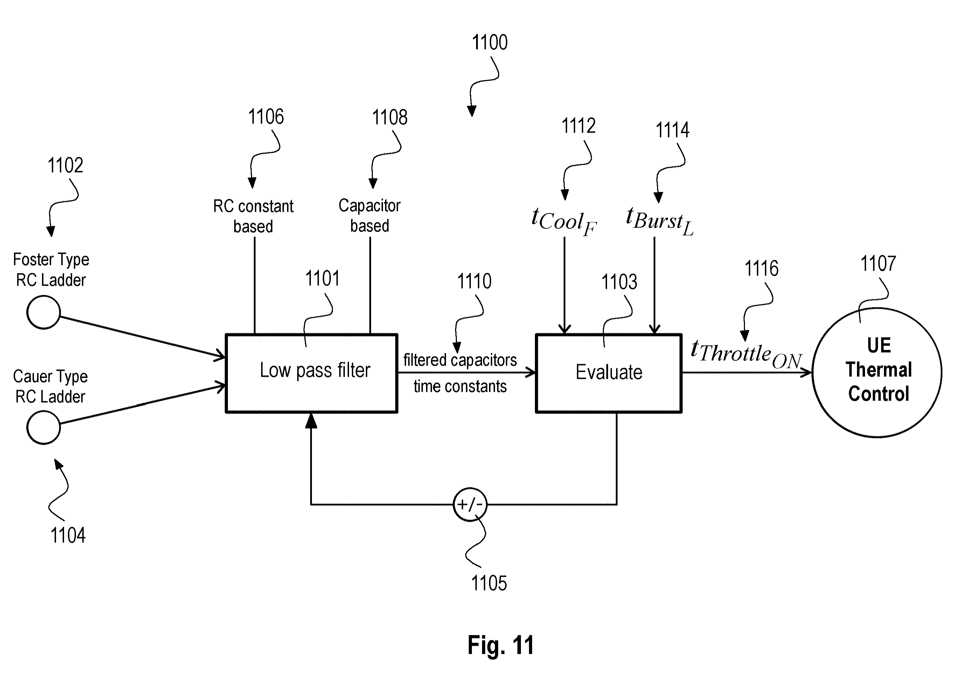

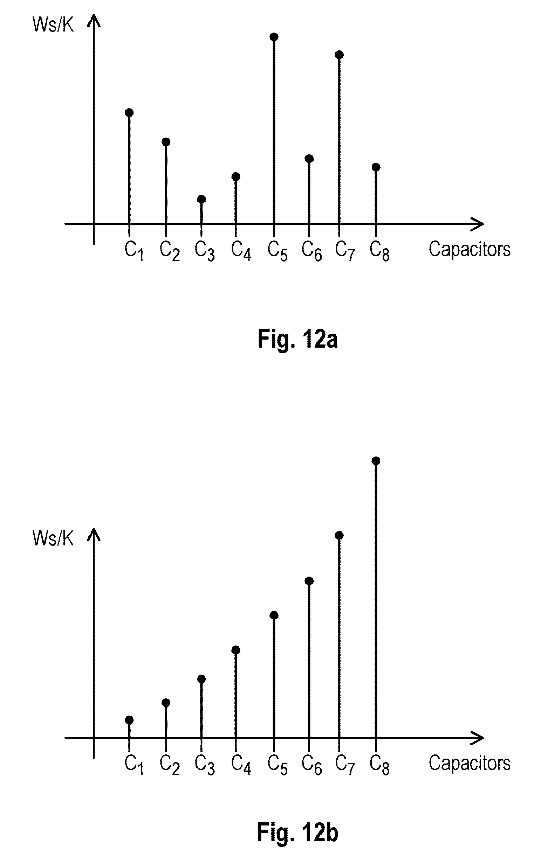

The method 500 may further include filtering the thermal network by low-pass filtering to obtain the impedance elements of the thermal network that are mainly contributing to the main thermal transient response of the electronic device, e.g. as described below with respect to Figure 11 and also with respect to Figure 12.

Filtering the thermal network may include eliminating thermal impedance elements from the thermal network which mainly influence an asymptotic behavior of the thermal transient response of the electronic device. The thermal impedance elements that are eliminated from the thermal network may include capacitances which nominal value lies below a predetermined threshold value. The thermal impedance elements that are eliminated from the thermal network may include RC time constants which nominal value lies above a predetermined threshold value.

Alternatively, a model for the RC ladder may be derived by using the time transients and fitting the R and C values until a reasonable fit with measurements is achieved. That means, only important R and C elements which are mainly contributing to the thermal transient response are considered and the other ones are dropped or ignored.

The method 500 may further include determining a throttling time based on the predicted main thermal transient response of the electronic device, wherein the throttling time indicates a time for the electronic device staying in the second state, i.e. in UE THROTTLED 402 according to Fig. 4.

The throttling time may depend on a predetermined temperature cooling fraction of the predicted main thermal transient response.

The throttling time may depend on a thermal burst length of the electronic device. For example, next "on" state i.e. the next burst may last e.g. one second and it may be predicted whether the temperature gets excessive during this one second. If so the UE should wait a little more to make sure that it will survive the next burst. This would guarantee that the UE doesn't have to abort it in the middle which would cost performance as the control loops, also in the network didn't have a chance to converge yet and fully use the bursts potential.

The throttling time may depend on a predetermined time difference between a time of entering the second state and a time of leaving the second state.

The method 500 may further include estimating a throttling profile for throttling activity of the electronic device in the second state based on the predicted main thermal transient response. The throttling profile may be selected from a set of predetermined throttling profiles.

The method 500 may further include utilizing the predicted main thermal transient response to adapt the throttling profile so that the main thermal transient response stays within predetermined limits.

The method 500 may further include: triggering a preventive throttling when the prediction detects that the rising temperature gradient will increase a frequency error that is maximal tolerable for a specific RAT (Radio Access Technology), e.g. 3G, 4G and 5G, even if the upper temperature threshold is not yet reached.

The method 500 may be applied to AFC (automatic frequency control) as described in the following: Modern phones use typically cheap i.e. non temperature compensated mother-quartzes as frequency source to save cost. By measuring the ambient temperature (ideally close to the quartz, but this would require additional components) it is possible to determine the frequency - temperature behavior and subsequently compensate the frequency accordingly (either by re-tuning the quartz or by taking the known frequency deviation into account in subsequent steps). The higher the temperature gradients are the more difficult it is to keep the frequency deviation within tolerable limits.

When the frequency error exceeds tolerable limits, a recalibration of the frequency has to be performed e.g. by measuring signals from the base station (which has a much better frequency stability than the device). If this calibration is done too late, then the device may in between miss reception from the base station (e.g. paging messages or data packages during DRX reception). The most critical scenario is cooling (temperature drops). E.g. when the device is very hot and the data transfer suddenly stops either due to gaps in traffic or it has to be stopped intentionally due to overheating (apply a strong throttling measure [e.g. forced IDLE]) and go to sleep for extended DRX times).

The decision when to wake up from there needs to consider the frequency accuracy of the quartz in order not to lose the cell on such aggressive throttling. E.g. having an immediate prediction via the method 500 on expected temperature gradient and expected inaccuracies of temperature estimations and consequently of frequency settings. This allows to just in-time adjust of Xtal drifts by the AFC algorithm. It also allows to schedule AFC updates (requiring to schedule measurements on the base station signal) well in advance before the temperature change has exceeded tolerable limits. The enhanced temperature gradient prediction via RC-ladders is very well suited for this application.

Via more sophisticated temperature prediction (and interpolation) a better prediction when the AFC really needs to be updated is possible (because the cumulative drift exceeds the admissible margin) i.e. trigger AFC updates more accurately and therefore less often. Otherwise a margin would be required and trigger them more on the save side i.e. more early and more often.

Alternatively the temperature of the Xtal can be predicted more accurately and thus temperature drift can be better compensated. That means, a constant temperature isn't an issue anyhow, typically gradients cause trouble, so the gradients can be predicted and thus the necessity for the next AFC and thus help to schedule the next one at the proper (but not unnecessarily early) time. The temperature predicting and the thermal ladder model may also be extended to predict the spatial variation of the temperature i.e. the difference of the temperature at the quartz, which his relevant for predicting the frequency error, compared to the temperature measured at the closest temperature sensors or a set of close by temperature sensors, which is what is available for measurements.

Probably the most specific variant is the prediction of wake-up times for the modem to enable AFC recalibration taking predicted temperature behavior into account by using the temperature ladder model. Using a temperature prediction is better than measurements because it eliminates the delay from measurements. The latter may cause a recalibration when it is already too late or alternatively require to add another a safety margin.

The method 500 allows enhancing the AFC (Automatic Frequency Control), i.e. frequency tuning or compensation of the mother quartz (master clock on electronic device), despite large temperature gradients due to throttling and otherwise bursty traffic as described in the following. The method 500 may further include utilizing the predicted main thermal transient response to schedule automatic frequency control (AFC) updates. The method 500 may further include that AFC updates are not only performed based on temperature prediction, but even the throttling strategy may be changed based on prediction of a troublesome temperature evolution for the AFC, e.g. a cooling that is too quickly or a heating that is too quickly to keep the frequency stable enough. Throttling profiles may be selected based on that condition, i.e. succession of throttling states over time so that AFC doesn't make trouble. Therefore full power mode may not be followed by the strongest throttling mode but in between a lighter throttling mode may be used for some time to soften the thermal evolution. When to switch between the different throttling modes may be based on thermal prediction. The thermal transient response prediction may be applied to AFC. I.e., prediction models may be utilized to predict when AFC updates are required and AFC updates may be scheduled proactively. AFC updates may even be integrated in the throttling profile. Prediction of the temperature gradient may be performed and utilized to adapt the throttling scheme so the gradient stays within predetermined limits (beyond where the AFC might fail).

The method 500 also allows to schedule AFC updates well in advance before the temperature change has exceeded tolerable limits. The enhanced temperature gradient prediction via RC-ladders is very well suited for this application. Via more sophisticated temperature prediction (and interpolation) a better prediction when the AFC really needs to be updated can be achieved, i.e. AFC updates can be triggered more accurately and therefore less often.

The method 500 may further include scheduling the AFC updates in advance before a temperature change exceeds a predetermined tolerance range.

The method 500 may further include: determining a temperature evolution of the electronic device; and scheduling the AFC updates if the temperature evolution is out of a predetermined range.

The method 500 may further include: determining a temperature dependent frequency error of the electronic device based on the predicted main thermal transient response; and initiating a preventive temperature throttling if the determined frequency error exceeds a threshold.

The method 500 may further include: measuring a plurality of temperatures at different locations of the electronic device; and selecting a highest temperature of the plurality of temperatures to be the temperature of the electronic device.

The method 500 may be described in other words as follows: Measuring a temperature of the electronic device; throttling activity of the electronic device if the measured temperature exceeds a given temperature threshold; and finishing the throttling based on a prediction of a main thermal transient response of the electronic device.

There is a difference to mitigation schemes used in processors: Processors typically work on their own pace and therefore can do a fine grain throttling, running precisely at the power that keeps the temperature at the optimal point. This can be achieved by adapting the clock frequency (and possibly supply voltage) precisely (e.g. in steps of 10%). In contrast, the UE cannot do that but has to switch between completely different algorithms which change power magnitude of throttling depending on radio conditions (e.g. with or without interference cancellation, one pair of extra turbo code half iterations) and it does not make sense to switch too quickly (e.g. CQI signaling has to be adapted and only happens every so many 100ms). Therefore the UE has to be more cautious before switching into a higher power mode (terminating a lower power mode) as switching too often would reduce achievable performance.

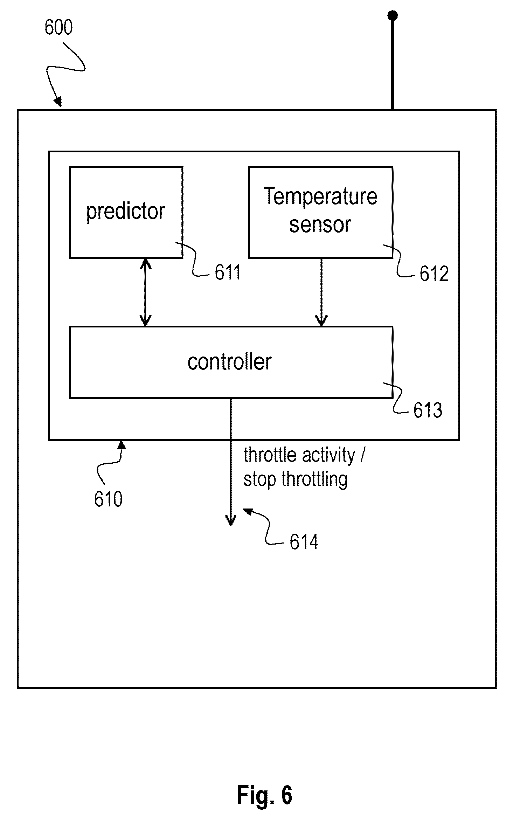

Fig. 6 illustrates a block diagram of a thermal management control device 610 for thermal management control of an electronic device 600, for example, a user equipment (UE) according to the disclosure.

The thermal management control device 600 includes a temperature sensor 612, a predictor 611 and a controller 613. The temperature sensor 612 measures a temperature of the electronic device. The predictor 611 predicts a main thermal transient response of the electronic device. The controller 613 throttles activity of the electronic device if the measured temperature exceeds a given temperature threshold and finishes the throttling based on the predicted main thermal transient response of the electronic device. The controller 613 may implement the method 500 as described above with respect to Fig. 5 for thermal management control.

The predictor 611 may include a representation of a thermal network including a plurality of thermal impedance elements, e.g. a thermal network 200 as described with respect to Fig. 2 or a thermal network 1000a, 1000b as described with respect to Figs. 10a and 10b. The thermal network may include an RC ladder which thermal impedance elements are formed by resistors (R) and capacitances (C), e.g. a thermal network 200 as described with respect to Fig. 2 or a thermal network 1000a, 1000b as described with respect to Figs. 10a and 10b. The RC ladder may be according to a Foster or a Cauer model.

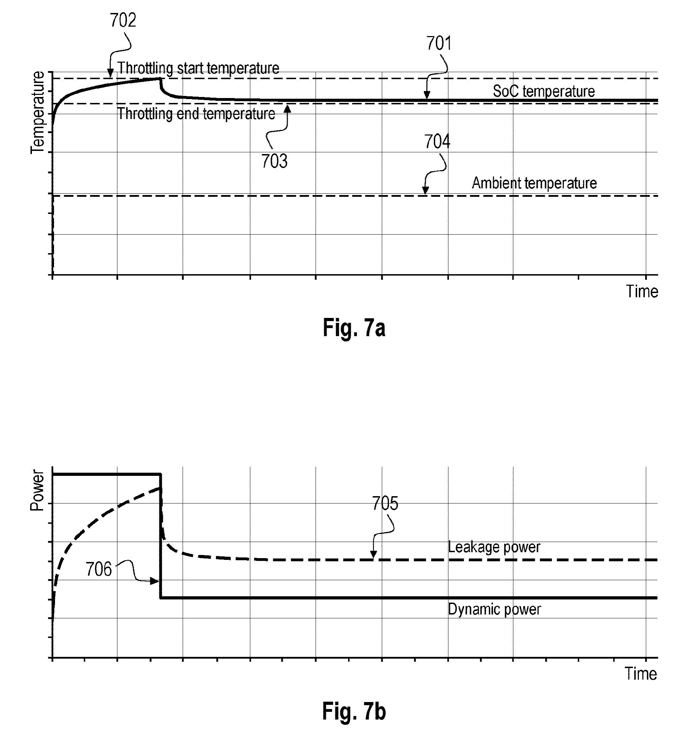

Figures 7a and 7b are diagrams illustrating temperature (Fig. 7a) and power (Fig. 7b) versus time for UE throttling based on temperature/power input without using prediction of the thermal response according to the disclosure. In the test setup of auxiliary modem data throttling the following parameters were applied: LTE data throttling; Ambient Temperature: 35°C; 10 °C cooling target via system capability throttling.

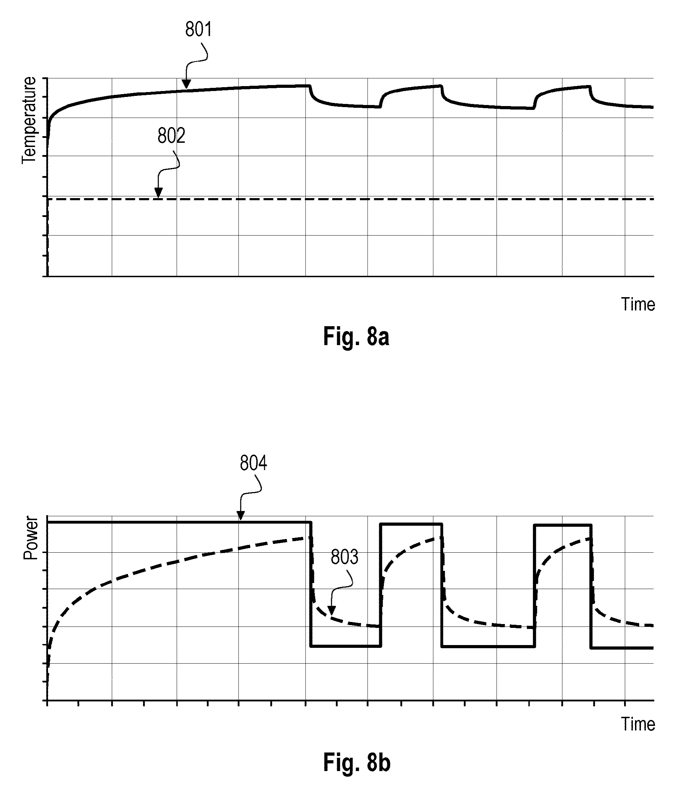

From the Figures it can be seen that a certain throttling step is activated as long as a target temperature level 703, which is a certain temperature threshold lower than a trigger temperature 702, is reached. This leads to an extended duration of unnecessary system limitation and thus lower data average throughput and more visible user experience impact. In certain scenarios, unchanged system throttling is active without reaching abortion criteria for the duration of several minutes. In the given test setup shown in Figures 7a and 7b, it can be seen that the modem temperature 701 reacts on the UE capability throttling. However for an extended period of time the UE remains in throttled mode with having infinitesimally low efficiency on temperature mitigation. The applied throttling scheme is not released for several minutes, cutting device data performance metrics and capabilities to a large extent as the target throttling end temperature 703 is almost approached asymptotically but not reached in reasonable time period. The UE remains in "throttled mode". A data throttling according to the disclosure improves the performance as can be seen from Figures 8a and 8b described below where the same test setup is used.

Figures 8a and 8b are diagrams illustrating temperature (Fig. 8a) and power (Fig. 8b) versus time for UE throttling based on temperature/power input according to the disclosure.

From the Figures it can be seen that application of the throttling step is reduced compared to the representation in Figures 7a and 7b. Due to the prediction of the main thermal transient response, throttling may be released when a main temperature development has occurred and a main thermal energy flow has happened. This leads to a shorter duration of unnecessary system limitation and thus higher data average throughput and less visible user experience impact.

Thermal management based on prediction of a main thermal transient response of the electronic device thus allows detecting and avoiding low efficiency periods of a throttling profile, where slow time constants and large thermal capacitances limit system capabilities without any or marginal temperature mitigation effect. It also predicts next available burst duration time via tracking of transient budget recovers status, which will schedule new burst windows earlier and thus allow more burst cycles to happen in given transmission period.

Hence, thermal management based on prediction of a main thermal transient response according to the disclosure is more efficient than simply increasing the lower threshold temperature, because it avoids that the temperature subsequently increases too quickly into unfavorable ranges, depending on current operating conditions. This can be achieved by estimating a throttling end time such that a new robust burst duration can be started with low likelihood of an early re-throttling. Thus the disadvantage of increasing the lower threshold temperature, i.e. scheduling short bursts and suffering from inefficiencies due to switching are avoided.

By using such throttling scheme the overall modem data throughput can be increased at high temperature by early release of low efficient temperature mitigation periods which can be utilized as additional high capability slots. The performance test increases CAT12 capability considerably in high temperature scenarios.

The energy efficiency is also increased, because, as can be seen from Figures 8a and 8b, during non-throttling mode the dynamic power 804 (i.e. the power spent on useful computing) is higher than the leakage power 803 (not contributing to useful computing) wherein during throttling mode the relation is inverted. Thus, by increasing the time in non-throttling mode the efficiency (i.e. power in relation to useful computing) is enhanced.

The advantage of such throttling schemes is that cooling efficiency of modem thermal throttling periods can be considerably improved thereby avoiding to a wide extent throttling periods that have marginal or slow effects on temperature mitigation.

Figures 9a, 9b and 9c are temperature diagrams 900a, 900b, 900c illustrating a temperature response for a 1-step RC ladder network (Fig. 9a), for a 3-step RC ladder network (Fig. 9b) and for a 6-step RC ladder network (Fig. 9c) according to the disclosure.

Figure 9a shows a comparison of temperature simulation 902 performed with FloTherm vs. approximated temperature curve 901 for a single RC element. Figure 9b shows a comparison of temperature simulation 904 performed with FloTherm vs. approximated temperature curve 903 for a ladder with 3 RC elements. Figure 9c shows a comparison of temperature simulation 906 performed with FloTherm vs. approximated temperature curve 905 for a ladder with 6 RC elements. The vertical axes indicate temperature increase above equilibrium in °C. The horizontal axes indicate time in seconds on a log scale. Note that curves 902, 904 and 906 are identical as they represent the perfect temperature evolution or simulation thereof with a complete set of parameters.

These figures show a comprehensive temperature simulation performed with "FloTherm" in comparison with approximations (best fit) using 1, 3 or 6 step- RC ladders. Note that the time is plotted in log- scale. If too few RC elements are considered, then only the "average" transient temperature at the most prominent time scale is captured correctly (in this case some 11°C increase after some 2.5 seconds) while the temperature at smaller times is underestimated and at larger times (e.g. a few tens of seconds) is overestimated. In particular the latter is worrisome, because the simple implementation underestimates the time the unit can be operated before exceeding e.g. 15°C is underestimated to be some 4 sec instead of some 20 seconds. The former time may be considered still too short to start a download sprint (as both CQI (Channel Quality Indicator) feedback and TCP need to adapt to the new situation before being able to fruitfully utilize the higher data rate), while the latter is certainly enough time. More precise knowledge of to be expected temperature raises will allow more precise application of most appropriate throttling schemes.

Obviously the number of ladder-steps necessary to consider varies with the environment (or the physical properties of all the temperature flows from the junction to the housing), depending on the scenario and the required accuracy typically some 3 to 8 ladders steps should be considered: Looking at several simulations it appears that to be able to represent a whole/wide range of different temperature curves, 8 rungs would be perfect. In the simulations, most curves can be fitted with 6 order RC ladders and some basic curves, can be fairly (with some deviations) also be represented with 3 steps.

Current designs have a lot of temperature sensors integrated on the silicon, allowing measurements at multiple places which can be read out for example every 100ms. One exemplary UE chip has more than 10 such sensors and an individual measurement only lasts a couple of milliseconds. Further thermal sensors on the chip may be used during production and/or calibration for external equipment, but they can also be used online if necessary.

These multiple measurements allow (via averaging) to obtain good temperature estimates. Furthermore, by measuring on multiple places along the heat flow, not only a temperature- time model can be used but also more sophisticated models using temperatures on multiple points within the design, i.e. spatial characteristics and i.e. the heat flow, allowing more elaborate and accurate temperature estimation and prediction.

Figure 10a is a block diagram 1000a illustrating a Foster RC ladder network used for temperature prediction according to the disclosure. The Foster RC ladder network 1000a includes a line of multiple RC impedance elements 1001, 1002, 1003 each one including a resistor R coupled in parallel to a capacitor C. An input of the Foster RC ladder network 1000a is between an input of the first impedance element 1001 and a reference potential such as ground; the output of the last impedance element 1003 is connected to ground where ground is representing ambient temperature.

Figure 10b is a block diagram 1000b illustrating a Cauer RC ladder network 1000a used for temperature prediction according to the disclosure. The Cauer RC ladder network 1000b includes a line of multiple RC impedance elements 1004, 1005, 1006, 1007 each one including a resistor R and a capacitor C shunted to a reference potential such as ground. The resistors are connected in series while the capacitors at respective taps of the line are shunted to ground. An input of the Cauer RC ladder network 1000a is between the two terminals of the first capacitor C of the first impedance element 1004; the output of the last impedance element 1007 is connected to ground.

CFD (computational fluid dynamics) is a simulation technology which uses numerical methods to solve a set of complex non-linear partial differential equations to model and predict heat flow in e.g. geometric/physical domain of a SoC (system on chip). It can be used to model and capture continuous heating curves (temperature step response) on any position of the SoC. Thermal RC models can be setup and derived by fitting the heating curve. Hereby a continuous response is discretized via superposition of a number of exponential terms which model the heating waveform. The parameters can be tuned via e.g. applying a least square fit algorithm until the time response of the RC model matches the heating curve accurate enough. The derived RC ladder can be used to easily calculate chip temperature transient response upon any throttling profile.

In Foster representations, resistors and capacitors cannot be mapped 1:1 to geometrical locations of the physical system/device. However a Foster representation can always be transformed to a Cauer representation and vice versa, for the latter the resistors and capacitors can be associated with the different portions of the system through which the heat sequentially travels.

Figure 11 is a schematic diagram 1100 illustrating UE thermal management by utilizing RC ladder networks according to the disclosure.

The UE thermal management may be represented by an RC ladder evaluator 1103 which receives filtered capacitors and time constants 1110 provided by a low pass filter 1101 and calculates the throttling ON time $t_{Throttle,ON}$ 1116 based on $tCool_F$ 1112, that is a temperature cooling fraction of the transient profile and $tBurst_L$ 1114, i.e., a thermal burst length. The throttling ON time 1116 is provided to UE thermal control 1107. The low pass filter 1101 represents prediction of the main thermal transient response by filtering the RC elements of the thermal network that are the main contributors of the thermal transient response. A Foster type RC ladder 1102 or a Cauer type RC ladder 1104 is applied for the thermal network. The low pass filter 1101 uses RC constant based filtering 1106 or capacitor based filtering 1108. Feedback errors from the evaluation 1103 are considered by the low pass filter 1101.

The diagram 1100 illustrates the basic concept for predicting the main thermal transient response of an electronic device and for utilizing RC ladder in modem throttling according to the disclosure. RC ladder information 1102, 1104 can be utilized to obtain an optimal activity and on time 1116 of modem throttling schemes. Since each modem throttling interferes on the link/connection between UE and eNB, it is essential to have intended effects applied for the minimum possible time. Non-effective throttling states shall be avoided. An optimization criterion can be based on finding/determining throttling ON time 1116. The RC Ladder "Evaluator" 1103 may be parameterized to provide a throttling ON time 1116 such that a target cooling fraction 1112 of the respective transient profile can be achieved. This ensures that a portion of the throttling capacity is utilized, for example 55% of the steady-state temperature level of the respective throttling profile while staying in throttled mode as short as possible. The RC Ladder "Evaluator" 1103 may be parameterized to provide a throttling ON time 1116 such that a necessary next burst cycle is feasible which justifies switching time and allows e.g. at least 20 sec of full UE capabilities. The low pass filter 1101 in Figure 11 may use capacitor profiles dependent on selected RC ladder representation 1102, 1104. Alternatively, the predictor can output a predicted time for non-throttling the device before reaching excessive temperatures which can be used to decide whether it is already feasible to switch throttling off. This prediction may take into account a delay before switching throttling off becomes effective and predict the temperature during the non-throttling mode and the preceding transient behavior.

Figures 12a and 12b are exemplary capacitor profiles of a Foster RC ladder network (Fig. 12a) and a Cauer RC ladder network (Fig. 12b) used for temperature prediction according to the disclosure. In the Foster RC ladder network nominal values of capacitors are decreasing and increasing multiple times, while in the Cauer RC ladder network nominal values of capacitors are monotonously increasing.

Another way, the RC ladder information can be utilized is to select a specific throttling method (out of many throttling approaches) that is closest to a throttling profile required. It means for example that a certain UE condition sets boundaries on the throttling period such as the maximum throttling activity time ($t_{Throttle,Max}$) or the temperature difference in degrees Celsius ($\Delta T_{Throttle}$).

A possible UE specific condition may be for example to stop throttling during VoLTE packets transmission, which occurs every 40ms. Using the thermal model it can be predicted how much throttling is required outside the VoLTE packets to avoid throttling within these packets. Throttling during VoLTE packets would cause degradation of voice services because voice information is carried via VoLTE packets. Similar schemes can be used for other ways for conveying voice information.

By utilizing the ladder information, a throttling profile can be estimated that may be required to satisfy condition boundaries. The estimated profile can be compared to available throttling responses, and the one that is closest in terms of the expected transient can be activated. If the estimated throttling profile doesn't show sufficient match with any of the available throttling methods, a new throttling profile can be created via combination of multiple throttling methods transient responses, by the RC ladder information.

For this purpose the following mathematical representation of the RC ladder is solved iteratively

$$\Delta T_{Throttle}(t_{Throttle,Max}) = P_{Throttle,Profile}(R_1(1 - e^{(-\frac{t}{R_1 C_1})}) + R_2(1 - e^{(-\frac{t}{R_2 C_2})}) + ... + R_n(1 - e^{(-\frac{t}{R_n C_n})}))$$

such that

(1) ratio $(\frac{\Delta T_{Throttle}}{t_{Throttle}})$ is maximized with given constraints of minimum ($\Delta T_{Throttle,Min}$) and maximum ($t_{Throttle,Max}$) and

(2) $\dfrac{\Delta T_{Throttle}}{\Delta T_{Max,Profile}} \geq tCool_F$

with $\Delta T_{Max,Profile}$ representing temperature steady state, maximum achievable temperature mitigation, of selected throttling profile.

The non-linearity of power dissipation versus temperature may also be considered for the determination of the temperature evolution prediction over time. On the one hand, the hotter the silicon gets the more power will be dissipated due to higher temperature gradients and thus the higher the dynamic power can be and thus the fraction of time spent in the non-throttled power state gets larger. On the other hand, the hotter the silicon gets, the higher will be the leakage power, and thus less power remains to be used for dynamic power and thus the fraction of time spent in the non-throttled power state gets smaller. Consequently there will be an optimal temperature, balancing these two effects. So this temperature dependent behaviour of the power consumption can be taken into account for the temperature prediction.

On the one hand, states should be changed seldom to avoid overhead from switching states (this may include some processing related to switching which contributes to thermal budget but does not contribute to throughput or some activities for one state may be lost due to switching or the benefits of the non-throttling states cannot be utilized immediately). On the other hand, rapid switching allows oscillating precisely around the optimum temperature defined above and thus allows the best achievable throughput by devoting the maximum dynamic power i.e. processing. Consequently there will be an optimal switching rate balancing these two effects.

These two selections can be optimized by selecting the switching rate and target temperature (or equivalently upper / lower threshold temperatures for switching into /out of throttling modes) depending on parameters properties listed below by taking the properties of a dynamic temperature model into account.

The parameters $tCool_F$, $tBurst_L$, $\Delta T_{Throttle}$, $t_{Throttle,Max}$ can be taken into account to help determine the optimum scheme by estimating the temperature evolution and the optimum throttling method.

The properties of the thermal model, i.e., Rx and Cx can be predetermined (calculated from the designs properties or measured on prototypes) or can be adapted/learned/refined during actual operation from the observed/measured temperature. The latter may help to adapt the model to changing ambient conditions like ambient temperature differences of temperature across the device (e.g. placing on a hot object e.g. in a car), additional energy influx (e.g. solar radiation) and different thermal resistance e.g. due to additional cases around the device. It may also capture different distribution of power generation within the device due to differences in required signal processing. The processing and therefore the power generated therefrom may depend on signal characteristics.

In one implementation a switch into non-throttling mode may be performed as soon as the prediction indicates that the time that can be spent in non-throttling mode is larger than a minimum predetermined time. This helps to maximize the time spent in non-throttling mode, but may cause many state-changes. Further, the time duration in throttled state will be minimized while having temperature recovered such to sustain a given burst-length in non-throttling mode.

In another implementation not only the time may be predicted that will be possible to spend in non-throttling when switching now, but also will determine how this time changes when switching somewhat later. If it pays off to switch later i.e. if the extra time the non-throttling mode can be used over-compensates the fact that the mode can only be activated somewhat later, then the switch to non-throttling may be delayed.

The devices and systems described in this disclosure may be implemented as Digital Signal Processors (DSP), microcontrollers or any other side-processor or hardware circuit on a chip or an application specific integrated circuit (ASIC).

Embodiments described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the methods 500, 600 described above with respect to Figs. 4 and 5. Such a computer program product may include a readable storage medium storing program code thereon for use by a processor, the program code comprising instructions for performing the methods 400, 500 as described above.

**EXAMPLES**

The following examples pertain to further embodiments. Example 1 is a method for thermal management control of an electronic device, the method comprising: changing an initial state of the electronic device from a first state to a second state, or from the second state to the first state, based on a temperature of the electronic device compared to a predetermined temperature threshold, wherein the first state is a state of activity and the second state is a state of throttled activity; and changing a state of the electronic device back to the initial state based on a determined main thermal transient response of the electronic device.

In Example 2, the subject matter of Example 1 can optionally include that the main thermal transient response comprises a section of a thermal transient response of the electronic device in which at least one of a main temperature development or a main thermal energy flow occurs.

In Example 3, the subject matter of any one of Examples 1-2 can optionally include that the main thermal transient response comprises an initial section of the thermal transient response.

In Example 4, the subject matter of any one of Examples 1-3 can optionally include: predicting the thermal transient response of the electronic device based on a thermal network comprising a plurality of thermal impedance elements.

In Example 5, the subject matter Example 4 can optionally include that the thermal network comprises an RC ladder which thermal impedance elements are formed by resistors (R) and capacitances (C).

In Example 6, the subject matter of Example 5 can optionally include that the RC ladder is according to one of a Foster or Cauer model.

In Example 7, the subject matter of any one of Examples 4-6 can optionally include: filtering the thermal network by low-pass filtering to obtain the impedance elements of the thermal network that are mainly contributing to the main thermal transient response of the electronic device.

In Example 8, the subject matter of Example 7 can optionally include that filtering the thermal network comprises eliminating thermal impedance elements from the thermal network which mainly influence an asymptotic behavior of the thermal transient response of the electronic device; that the thermal impedance elements eliminated from the thermal network comprise capacitances which nominal value lies below a predetermined threshold value; and that the thermal impedance elements eliminated from the thermal network comprise RC time constants which nominal value lies above a predetermined threshold value.

In Example 9, the subject matter of any one of Examples 1-8 can optionally include: determining a throttling time based on the predicted main thermal transient response of the electronic device, wherein the throttling time indicates a time for the electronic device staying in the second state.

In Example 10, the subject matter of Example 9 can optionally include that the throttling time depends on a predetermined temperature cooling fraction of the predicted main thermal transient response.

In Example 11, the subject matter of any one of Examples 9-10 can optionally include that the throttling time depends on a thermal burst length of the electronic device.

In Example 12, the subject matter of any one of Examples 9-11 can optionally include that the throttling time depends on a predetermined time difference between a time of entering the second state and a time of leaving the second state.

In Example 13, the subject matter of any one of Examples 1-12 can optionally include: estimating a throttling profile for throttling activity of the electronic device in the second state based on the predicted main thermal transient response.

In Example 14, the subject matter of Example 13 can optionally include that the throttling profile is selected from a set of predetermined throttling profiles.

In Example 15, the subject matter of any one of Examples 13-14 can optionally include: utilizing the predicted main thermal transient response to adapt the throttling profile so that the main thermal transient response stays within predetermined limits.

In Example 16, the subject matter of any one of Examples 1-15 can optionally include: utilizing the predicted main thermal transient response to schedule automatic frequency control (AFC) updates.

In Example 17, the subject matter of Example 16 can optionally include: scheduling the AFC updates in advance before a temperature change exceeds a predetermined tolerance range.

In Example 18, the subject matter of any one of Examples 16-17 can optionally include: determining a temperature evolution of the electronic device; and scheduling the AFC updates if the temperature evolution is out of a predetermined range.

In Example 19, the subject matter of any one of Examples 1-18 can optionally include: determining a temperature dependent frequency error of the electronic device based on the predicted main thermal transient response; and initiating a preventive temperature throttling if the determined frequency error exceeds a threshold.

In Example 20, the subject matter of any one of Examples 1-19 can optionally include: measuring a plurality of temperatures at different locations of the electronic device; and selecting a highest temperature of the plurality of temperatures to be the temperature of the electronic device.

Example 21 is a computer readable non-transitory medium on which computer instructions are stored which when executed by a computer, cause the computer to perform the method of any one of Examples 1 to 20.

Example 22 is a method for thermal management control of an electronic device, the method comprising: measuring a temperature of the electronic device; throttling activity of the electronic device if the measured temperature exceeds a given temperature threshold; and finishing the throttling based on a prediction of a main thermal transient response of the electronic device.

In Example 23, the subject matter of Example 22 can optionally include that the main thermal transient response comprises a section of the thermal transient response in which at least one of a main temperature development or a main thermal energy flow occurs.

In Example 24, the subject matter of any one of Examples 22-23 can optionally include that the main thermal transient response comprises an initial section of the thermal transient response.

In Example 25, the subject matter of any one of Examples 22-24 can optionally include: predicting the main thermal transient response of the electronic device based on a thermal network comprising a plurality of thermal impedance elements.

In Example 26, the subject matter of Example 25 can optionally include that the thermal network comprises an RC ladder which thermal impedance elements are formed by resistors (R) and capacitances (C).

In Example 27, the subject matter of Example 26 can optionally include that the RC ladder is according to one of a Foster or Cauer model.

Example 28 is a computer readable non-transitory medium on which computer instructions are stored which when executed by a computer, cause the computer to perform the method of any one of Examples 22 to 27.

Example 29 is a thermal management control device for managing thermal control of an electronic device, the thermal management control device comprising: a temperature sensor configured to measure a temperature of the electronic device; a predictor, configured to predict of a main thermal transient response of the electronic device; and a controller configured to throttle activity of the electronic device if the measured temperature exceeds a given temperature threshold, and configured to finish the throttling based on the predicted main thermal transient response of the electronic device.

In Example 30, the subject matter of Example 29 can optionally include that the predictor comprises a thermal network comprising a plurality of thermal impedance elements.

In Example 31, the subject matter of Example 30 can optionally include that the thermal network comprises an RC ladder which thermal impedance elements are formed by resistors (R) and capacitances (C).

In Example 32, the subject matter of Example 31 can optionally include that the RC ladder is according to one of a Foster or Cauer model.

Example 33 is a thermal management system adapted for managing thermal control used in an electronic device, the thermal management control system comprising: a temperature sensing component configured to measure a temperature of the electronic device; a processing component configured to determine a thermal transient response of the electronic device; and wherein the processing component is further configured to start throttling activity of the electronic device when the measured temperature exceeds a predetermined temperature threshold, and configured to stop the throttling activity based on the determined thermal transient response of the electronic device..

In Example 34, the subject matter of Example 33 can optionally include that the predictor comprises a thermal network comprising a plurality of thermal impedance elements.

In Example 35, the subject matter of any one of Examples 33-34 can optionally include that the thermal management system is implemented on a chip comprising the electronic device.

Example 36 is a device for thermal management control of an electronic device, the device comprising: means for measuring a temperature of an electronic device; means for throttling activity of the electronic device if the measured temperature exceeds a given temperature threshold; and means for finishing the throttling based on a prediction of a main thermal transient response of the electronic device.

In Example 37, the subject matter of Example 36 can optionally include that the thermal transient response comprises a section of the thermal transient response in which at least one of a main temperature development or a main thermal energy flow occurs.

In addition, while a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it is understood that aspects of the disclosure may be implemented in discrete circuits, partially integrated circuits or fully integrated circuits or programming means. Also, the terms "exemplary", "for example" and "e.g." are merely meant as an example, rather than the best or optimal.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

**Claims**

1. A method for thermal management control of an electronic device, the method comprising:

changing an initial state of the electronic device from a first state to a second state, or from the second state to the first state, based on a temperature of the electronic device compared to a predetermined temperature threshold, wherein the first state is a state of activity and the second state is a state of throttled activity; and changing a state of the electronic device back to the initial state based on a determined main thermal transient response of the electronic device.

2. The method of claim 1,
wherein the main thermal transient response comprises a section of a thermal transient response of the electronic device in which at least one of a main temperature development or a main thermal energy flow occurs.

3. The method of claim 1 or 2,
   wherein the main thermal transient response comprises an initial section of the thermal transient response.

4. The method of one of the preceding claims, comprising:

   predicting the thermal transient response of the electronic device based on a thermal network comprising a plurality of thermal impedance elements.

5. The method of claim 4,
   wherein the thermal network comprises an RC ladder which thermal impedance elements are formed by resistors (R) and capacitances (C).

6. The method of claim 5,
   wherein the RC ladder is according to one of a Foster or Cauer model.

7. The method of one of claims 4 to 6, comprising:

   filtering the thermal network by low-pass filtering to obtain the impedance elements of the thermal network that are mainly contributing to the main thermal transient response of the electronic device.

8. The method of claim 7,
   wherein filtering the thermal network comprises eliminating thermal impedance elements from the thermal network which mainly influence an asymptotic behavior of the thermal transient response of the electronic device;
   wherein the thermal impedance elements eliminated from the thermal network comprise capacitances which nominal value lies below a predetermined threshold value; and
   wherein the thermal impedance elements eliminated from the thermal network comprise RC time constants which nominal value lies above a predetermined threshold value.

9. The method of one of the preceding claims, comprising:

   utilizing the predicted main thermal transient response to schedule automatic frequency control (AFC) updates.

10. The method of claim 9, comprising:

    Scheduling the AFC updates in advance before a temperature change exceeds a predetermined tolerance range.

11. The method of claim 9 or 10, comprising:

    determining a temperature evolution of the electronic device; and
    scheduling the AFC updates if the temperature evolution is out of a predetermined range.

12. The method of one of the preceding claims, comprising:

    determining a temperature dependent frequency error of the electronic device based on the predicted main thermal transient response; and
    initiating a preventive temperature throttling if the determined frequency error exceeds a threshold.

13. A computer readable non-transitory medium on which computer instructions are stored which when executed by a computer, cause the computer to perform the method of any one of claims 1 to 12.

14. A thermal management control device for managing thermal control of an electronic device, the thermal management control device comprising:

    a temperature sensor configured to measure a temperature of the electronic device;
    a predictor, configured to predict a main thermal transient response of the electronic device; and
    a controller configured to throttle activity of the electronic device if the measured temperature exceeds a given temperature threshold, and configured to finish the throttling based on the predicted main thermal transient response of the electronic device.

15. The thermal management control device of claim 29,
   wherein the predictor comprises a thermal network comprising a plurality of thermal impedance elements.

**Fig. 1**

200

201    202    203

R1    R2    Rn

C1    C2    Cn

Fig. 2

Fig. 3

400

410

Normal Temperature

401

411

High Temperature

UE
CONNECTED

403

UE
IDLE

412

Final Target Temperature

402

UE
THROTTLED

**Fig. 4**

500

Changing a state of the electronic device from a first state to a second state based on a temperature of the electronic device exceeding a given temperature threshold, wherein the first state is a state of activity and the second state is a state of throttled activity

501

Changing the state of the electronic device back to the first state based on a prediction of a main thermal transient response of the elctronic device

502

**Fig. 5**

600

predictor ⌐ 611

Temperature sensor ⌐ 612

controller ⌐ 613

610

throttle activity / stop throttling ⌐ 614

Fig. 6

702

701

Throttling start temperature

SoC temperature

Throttling end temperature

703

704

Ambient temperature

Temperature

Time

**Fig. 7a**

705

Power

Leakage power

706

Dynamic power

Time

**Fig. 7b**

801

Temperature

802

Time

**Fig. 8a**

804

Power

803

Time

**Fig. 8b**

Fig. 9a

**Fig. 9b**

Fig. 9c

**Fig. 10a**

**Fig. 10b**

Fig. 11

**Fig. 12a**

**Fig. 12b**

Europäisches
Patentamt

European
Patent Office

Office européen
des brevets

## EUROPEAN SEARCH REPORT

**Application Number**

EP 16 18 7236

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/278029 A1 (TOUZELBAEV MAXAT [US] ET AL) 1 November 2012 (2012-11-01) * paragraphs [0021] - [0048]; figures 1-6 * | 1-15 | INV. G06F1/20 |
| X | US 2013/259092 A1 (IM YUN-HYEOK [KR] ET AL) 3 October 2013 (2013-10-03) * paragraphs [0004] - [0087]; figures 1-11 * | 1-15 | |
| A | US 2015/134988 A1 (WANG HUI-HSUAN [TW] ET AL) 14 May 2015 (2015-05-14) * the whole document * | 1-15 | |
| A | US 2010/049995 A1 (CASEY JON A [US] ET AL) 25 February 2010 (2010-02-25) * the whole document * | 1-15 | |
| A | US 2003/110423 A1 (HELMS FRANK P [US] ET AL) 12 June 2003 (2003-06-12) * the whole document * | 1-15 | TECHNICAL FIELDS SEARCHED (IPC) |
| A | US 6 208 215 B1 (SAUER DON [US]) 27 March 2001 (2001-03-27) * the whole document * | 1-15 | G06F G01K H03L |

The present search report has been drawn up for all claims

| Place of search | Date of completion of the search | Examiner |
|---|---|---|
| Munich | 24 March 2017 | Vertua, Arturo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 7236

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2017

| Patent document cited in search report | | Publication date | Patent family member(s) | | Publication date |
|---|---|---|---|---|---|
| US 2012278029 | A1 | 01-11-2012 | NONE | | |
| US 2013259092 | A1 | 03-10-2013 | CN | 103364099 A | 23-10-2013 |
| | | | KR | 20130109788 A | 08-10-2013 |
| | | | US | 2013259092 A1 | 03-10-2013 |
| US 2015134988 | A1 | 14-05-2015 | CN | 104635789 A | 20-05-2015 |
| | | | US | 2015134988 A1 | 14-05-2015 |
| US 2010049995 | A1 | 25-02-2010 | NONE | | |
| US 2003110423 | A1 | 12-06-2003 | NONE | | |
| US 6208215 | B1 | 27-03-2001 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FOSTER ; KANDARP P. ; WHARTON M. ; VISHAY S.** A Simplified Method of Generating Thermal Models for Power MOSFETs. *IEEE proceedings,* 2002

- **CAUER ; ROGER PAUL.** *Thermal RC Ladder Networks,* 2006